(19) Europäisches Patentamt
European Patent Office
Office européen des brevets

(11) Numéro de publication : **0 409 683 B1**

(12) # FASCICULE DE BREVET EUROPEEN

(45) Date de publication du fascicule du brevet : **13.04.94 Bulletin 94/15**

(51) Int. Cl.$^5$ : **C08L 95/00,** C10C 3/02

(21) Numéro de dépôt : **90401878.5**

(22) Date de dépôt : **29.06.90**

(54) **Composition bitume/polymère présentant une adhésivité se conservant au stockage à température élevée et procédé de préparation d'une telle composition.**

(30) Priorité : **30.06.89 FR 8908768**

(43) Date de publication de la demande : **23.01.91 Bulletin 91/04**

(45) Mention de la délivrance du brevet : **13.04.94 Bulletin 94/15**

(84) Etats contractants désignés : **AT BE CH DE DK ES FR GB GR IT LI LU NL SE**

(56) Documents cités :
**EP-A- 0 096 638**
**EP-A- 0 360 656**
**WO-A-89/12079**
**DE-A- 1 941 631**
**FR-A- 2 181 587**
**FR-A- 2 429 241**
**US-A- 4 162 999**

(73) Titulaire : **ELF ANTAR FRANCE**
**Tour Elf 2, Place de la Coupole La Défense 6**
**F-92400 Courbevoie (FR)**

(72) Inventeur : **Chaverot, Pierre**
**15 rue Salvador Allende**
**F-69600 Oullins (FR)**
Inventeur : **Planche, Jean-Pascale**
**1,Allée des Chênes**
**F-69360 Serezin du Rhone (FR)**

(74) Mandataire : **Boillot, Marc**
**Elf Aquitaine Production Département**
**Propriété Industrielle Tour Elf Cédex 45**
**F-92078 Paris La Défense (FR)**

**EP 0 409 683 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne une composition bitume/polymère présentant une adhésivité se conservant au stockage à température élevée. Elle a trait encore à un procédé de préparation d'une telle composition ainsi qu'à l'application de cette composition à la réalisation de revêtements et en particulier de revêtements superficiels routiers, d'enrobés ou encore de revêtements d'étanchéité.

La citation EP-A-0096638 décrit la préparation de compositions bitume/polymère en mélangeant, entre 130°C et 230°C, un bitume avec un copolymère de styrène et d'un diène conjugué et une source de soufre du type polysulfure, le copolymère et la source de soufre étant ajoutés au bitume soit directement soit sous la forme d'une solution mère dans une huile hydrocarbonée, puis en maintenant le tout sous agitation entre 130°C et 230°C pendant au moins quinze minutes. La citation FR-A-2429241 concerne également la préparation de compositions bitume/polymère en mettant en contact, entre 130°C et 230°C, un bitume et une solution mère constituée d'un mélange d'un copolymère de styrène et d'un diène conjugué et de soufre chimiquement non lié dans une coupe pétrolière, et, en maintenant le tout sous agitation pendant au moins quinze minutes, un composé azoté, par exemple o-tolylguanidine, pouvant être ajouté au milieu réactionnel à titre d'accélérateur de vulcanisation.

La modification des bitumes par addition de polymères contribue à augmenter la viscosité des compositions bitume/polymère obtenues et réduit par la même l'aptitude au mouillage desdites compositions ou liants bitume/polymère sur les surfaces minérales et organiques en cas de non respect des températures de mise en oeuvre. Cette modification des propriétés interfaciales peut se traduire, sous l'effet de l'eau, par une diminution de l'adhésivité du liant bitume/polymère.

La citation FR-A-2181587 a pour objet une composition bitume/polymère utilisable comme liant routier, laquelle composition consiste en un mélange d'un bitume de type routier, d'un copolymère de styrène et de diène conjugué, d'une huile plastifiante, d'une résine susceptible d'augmenter le pouvoir collant du mélange et d'un activant d'adhésivité, notamment composé aminé du type amine grasse, destiné à améliorer l'adhésivité du liant aux agrégats en présence d'eau. L'efficacité de ces composés aminés s'atténue très rapidement après quelques heures, pour disparaître complètement après trois ou quatre jours de stockage entre 150°C et 160°C.

Pour remédier à cet inconvénient, l'invention propose une composition bitume/polymère modifiée par un composé azoté particulier, qui est intégré de façon irréversible au sein de la composition bitume/polymère, ce qui conduit à une composition bitume/polymère présentant des propriétés adhésives durables, dans les conditions de stockage aux températures de l'ordre de 150°C-160°C habituellement utilisées pour cette composition.

La composition bitume/polymère selon l'invention est du type comportant un bitume et, comptés en poids du bitume, 0,5 à 15 % d'un polymère et 0,05 à 10 % d'une composante azotée, consistant en un ou plusieurs composés azotés ayant une masse moléculaire supérieure à 90 et elle se caractérise en ce que la composante azotée est une composante adhésiphore renfermant un ou plusieurs composés greffés sur le polymère présent dans la composition bitume/polymère et choisis parmi les composés de formule générale $R\text{-}Z\text{-}R_1$ et leurs sels, avec dans cette formule R désignant un radical hydrocarboné aliphatique monovalent en $C_3$ à $C_{30}$ renfermant une ou plusieurs insaturations, Z représentant un groupement divalent choisi parmi

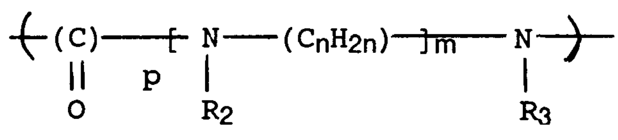

et 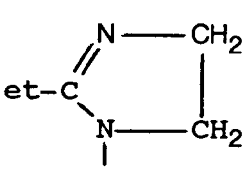 ,

où n désigne un nombre entier allant de 2 à 6 et de préférence de 2 à 4, m représente zéro ou un nombre entier allant de 1 à 6 et de préférence de 1 à 4 et p est égal à zéro ou 1, et $R_1$, $R_2$ et $R_3$, identiques ou différents, représentent chacun un atome d'hydrogène, un radical choisi parmi les radicaux R, un radical alkyle, hydroxyalkyle ou aminoalkyle en $C_1$ à $C_{18}$ et de préférence en $C_1$ à $C_{12}$ ou un radical $\left( C_q H_{2q} O \right)_r H$ avec q désignant un nombre égal à 2 ou 3 et r représentant un nombre entier allant de 2 à 10.

En particulier, dans le ou les composés de formule $R\text{-}Z\text{-}R_1$ formant la composante adhésiphore de la

composition bitume/polymère, c'est-à-dire la composante conférant les caractéristiques d'adhésivité à la composition, le radical R renfermant une ou plusieurs insaturations peut être notamment un radical alcényle, alcadiényle, alcatriényle, alcatétraényle ou encore alcapentaényle. De préférence, le radical R est choisi parmi ceux des radicaux R qui renferment 8 à 20 atomes de carbone. Des exemples de radicaux R convenant pour les composés azotés utilisés selon l'invention sont tels que décényl-9, décadiényl-2,4, décatriényl-2 ,4,6, dodécényl-9, hexadécényl-9, octadécényl-6, octadécényl-ll, octadécatriényl-9,12,15, octadécatétraényl-9,11,13,15, octadécatétraényl-6,9,12,15, eicosényl-9, eicosényl-11, eicosatétraényl-8,11,14,17, eicosatétraényl-5,8,11, 14, eicosapentaényl-5,8,11,14,17, docosényl-11, docosényl-13, docosapentaényl-7,19,13,16,17, tétracosényl-15.

Conviennent tout spécialement comme composés azotés adhésiphores selon l'invention, les composés de formules

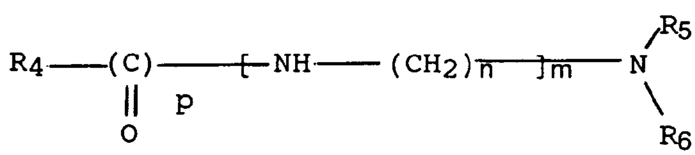

ou

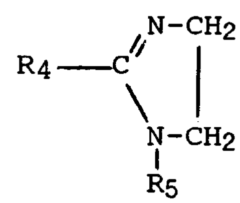

dans lesquelles $R_4$ désigne un radical hydrocarboné aliphatique monovalent en $C_8$ à $C_{20}$ possédant une ou plusieurs insaturations du type $>C=C<$, les symboles $R_5$ et $R_6$, identiques ou différents, désignent chacun un atome d'hydrogène ou un radical alkyle, aminoalkyle ou hydroxyalkyle en $C_1$ à $C_8$ et p, m et n ont les significations données précédemment.

Comme exemples de tels composés on peut citer, à titre non limitatif, la décényl-9 amine, la dodécényl-9 amine, l'hexadécényl-9 amine, l'octadécényl-6 amine, l'oléylamine ou octadécényl-9 amine, la décatriényl-2,4,6 amine, l'octadécatriényl-9,12,15 amine, le chlorhydrate de suif propylène diamine, le chlorhydrate de suif propylène-triamine, la N,N-diméthyloléylamide, la N,N-diéthyloléylamide, l'oléyl-2 (hydroxy-2 éthyl)-1 imidazoline, l'amine de suif, l'amine de coprah, la suif propylène triamine.

Le bitume, qui constitue la partie majoritaire de la composition bitume/polymère suivant l'invention, est choisi parmi les divers bitumes ayant une pénétration, définie suivant la norme NFT 66004, comprise entre 5 et 500 et de préférence entre 20 et 400. De tels bitumes peuvent être, en particulier, des bitumes de distillation directe ou de distillation sous pression réduite, ou encore des bitumes soufflés ou semi-soufflés, lesdits bitumes ayant une pénétration comprise dans les intervalles précités.

Les polymères susceptibles d'être présents dans la composition bitume/polymère peuvent être choisis parmi les divers polymères généralement associés aux bitumes dans les compositions bitume/polymère. Lesdits polymères peuvent être, par exemple, des élastomères tels que polyisoprène, caoutchouc butyle, polybutène, polyisobutène, polyacrylates, polyméthacrylates, polynorbornène, copolymères ethylène/propène, terpolymères éthylène/propène/diène (EPDM), ou encore des polymères fluorés tels que polytétrafluoroéthylène, des polymères siliconés tels que polysiloxanes, des copolymères d'oléfines et de monomères vinyliques tels que copolymères éthylène/acétate de vinyle, copolymères éthylène/ester acrylique, copolymères éthylène/chlorure de vinyle, des polymères du type alcool polyvinylique, polyamide, polyester ou encore polyuréthanne.

Avantageusement le polymère présent dans la composition bitume/polymère est choisi parmi les copolymères statistiques ou séquencés de styrène et d'un diène conjugué car ces copolymères se dissolvent très facilement dans les bitumes et confèrent à ces derniers d'excellentes propriétés mécaniques et dynamiques et notamment de très bonnes propriétés de viscoélasticité. En particulier le copolymère de styrène et d'un diène conjugué est choisi parmi les copolymères séquencés de styrène et de butadiène, de styrène et d'isoprène, de styrène et de chloroprène, de styrène et de butadiène carboxylé et de styrène et d'isoprène carboxylé. Le copolymère de styrène et de diène conjugué, et en particulier chacun des copolymères précités, a avantageusement une teneur pondérale en styrène allant de 15% à 40%. La masse moléculaire viscosimétrique moyenne du copolymère de styrène et de diène conjugué, et notamment celle des copolymères mentionnés ci-dessus peut être comprise, par exemple, entre 30 000 et 300 000 et se situe de préférence entre 70 000 et 200 000.

De préférence, le copolymère de styrène et de diène conjugué est choisi parmi les copolymères di- ou triséquencés de styrène et de butadiène, de styrène et d'isoprène, de styrène et de butadiène carboxylé ou encore de styrène et d'isoprène carboxylé, qui ont des teneurs en styrène et des masses moléculaires situées dans les intervalles définis précédemment.

Rapportées en poids du bitume, les proportions préférées de polymère et de composante adhésiphore présents dans la composition bitume/polymère représentent 0,7 à 10% et 0,1 à 5% respectivement.

La composition bitume/polymère peut encore renfermer 1 à 30 % et plus particulièrement 3 à 20 %, en poids du bitume, d'un agent fluxant, qui peut consister, notamment, en une huile hydrocarbonée présentant un intervalle de distillation à pression atmosphérique, déterminé selon la norme ASTM D 86-67, compris entre 100°C et 450°C et situé plus spécialement entre 150°C et 380°C. Une telle huile hydrocarbonée peut être, par exemple, une coupe pétrolière de caractère aromatique, une coupe pétrolière de caractère naphténo-aromatique, une coupe pétrolière de caractère naphténo-paraffinique, une coupe pétrolière de caractère paraffinique, une huile de houille ou encore une huile d'origine végétale. Cette huile hydrocarbonée doit être suffisamment "lourde" pour limiter l'évaporation lors de son incorporation au bitume et en même temps suffisamment "légère" pour être éliminée au maximum pendant et après répandage de la composition bitume/polymère la contenant de manière à retrouver les mêmes propriétés mécaniques qu'aurait présentées, après répandage à chaud, la composition bitume/polymère exempte d'huile hydrocarbonée.

Un procédé pour la préparation de la composition bitume/polymère selon l'invention est du type dans lequel on met en contact, en opérant à une température comprise entre 100°C et 230°C et sous agitation pendant une durée d'au moins 10 minutes, le bitume choisi et, comptés en poids du bitume, 0,5 à 15 % et de préférence 0,7 à 10 % du polymère et 0,05 à 10 % et de préférence 0,1 à 5 % d'une composante azotée consistant en un ou plusieurs composés azotés ayant une masse moléculaire supérieure à 90 et l'on réalise ladite mise en contact en présence d'un agent de couplage fournissant du soufre libre élémentaire ou radicalaire, ledit agent de couplage étant présent dans le milieur renfermant le bitume, le polymère et la composante azotée en quantité propre à fournir une quantité de soufre libre représentant 0,1 à 10 % et de préférence 0,5 à 8 % du poids global de polymère et de composante azotée dans ledit milieu. Ledit procédé se caractérise en ce que la composante azotée est une composante adhésiphore renfermant un ou plusieurs composés choisis parmi les composés azotés ayant les formules définies précédemment.

Sans être lié par cette théorie, on pense qu'au cours de la mise en oeuvre du procédé ci-dessus, la composante adhésiphore est greffée à la composante bitume/polymère et plus spécialement aux chaînes du polymère présent dans le milieu réactionnel, ce qui conduit à une intégration irréversible de la composante adhésiphore au sein de la composition bitume/polymère.

Pour mettre en oeuvre le procédé selon l'invention, on réalise tout d'abord, à une température comprise entre 100°C et 230°C et sous agitation, un mélange des divers ingrédients, à savoir bitume, polymère, composante adhésiphore et agent de couplage, constituant le mélange réactionnel, puis on maintient le mélange réactionnel obtenu, dans ledit intervalle de température pendant une durée d'au moins 10 minutes et généralement allant de 10 à 180 minutes, pour permettre au soufre libre fourni par l'agent de couplage d'initier, d'une part, le greffage de la composante adhésiphore à la composante bitume/polymère et plus particulièrement sur les chaînes du polymère présent dans le milieu réactionnel et, d'autre part, le cas échéant le pontage des chaînes du polymère entre elles et/ou avec le bitume.

Selon une forme de mise en oeuvre du procédé selon l'invention, on opère en mettant tout d'abord en contact le polymère avec le bitume, dans les proportions choisies, à une température entre 100°C et 230°C et sous agitation, pendant une durée suffisante, généralement de l'ordre de quelques dizaines de minutes à quelques heures, pour former un mélange homogène, puis au mélange obtenu on ajoute la composante adhésiphore et l'agent de couplage et maintient le tout sous agitation à une température comprise entre 100°C et 230°C, par exemple correspondant à la température de mise en contact du polymère avec le bitume, pendant une durée au moins égale à 10 minutes et généralement allant de 10 à 180 minutes.

Les quantités de polymère, de composante adhésiphore et d'agent de couplage ajoutées au bitume sont choisies pour être comprises dans les intervalles définis précédemment pour ces quantités.

Lorsque l'on produit une composition bitume/ polymère selon l'invention renfermant un agent de fluxage, ce dernier peut être ajouté au milieu réactionnel, que l'on constitue à partir du bitume, du polymère, de la composante adhésiphore et de l'agent de couplage, à un moment quelconque de la constitution dudit milieu réactionnel, la quantité d'agent de fluxage étant choisie pour être comprise dans les intervalles définis précédemment pour cette quantité.

Selon une forme avantageuse de réalisation de ce type de composition bitume/polymère, le polymère, l'agent de couplage et éventuellement la composante adhésiphore sont incorporés au bitume sous la forme d'une solution mère de ces produits dans l'agent fluxant et en particulier dans l'huile hydrocarbonée définie précédemment comme susceptible de constituer l'agent fluxant. Si elle n'est pas présente dans la solution mère, la composante adhésiphore peut être incorporée au bitume avant, pendant ou après incorporation de la solution mère à ce dernier.

La solution mère est préparée par mise en contact des ingrédients la composant, à savoir agent fluxant servant de solvant, polymère, composante adhésiphore et agent de couplage, sous agitation, à des températures comprises entre 20 et 170°C et plus particulièrement entre 40 et 120°C, pendant un temps suffisant, par exemple d'environ 30 minutes à environ 120 minutes, pour obtenir une dissolution complète du polymère, de

la composante adhésiphore et de l'agent de couplage dans l'agent fluxant.

Les concentrations respectives du polymère, de la composante adhésiphore et de l'agent de couplage dans la solution mère peuvent varier assez largement en fonction notamment de la nature de l'agent fluxant utilisé pour dissoudre le polymère, la composante adhésiphore et l'agent de couplage. Ainsi les quantités respectives de polymère, de composante adhésiphore et d'agent de couplage peuvent représenter avantageusement 5% à 40%, 0,5% à 25% et 0,01 à 10% du poids de l'agent de fluxage. Une solution mère préférée renferme, comptés en poids de l'agent de fluxage du type huile hydrocarbonée définie précédemment, 10 à 35% de polymère, 1 à 20% de composante adhésiphore et 0,05 à 5% d'agent de couplage.

Pour préparer la composition bitume/polymère en utilisant la solution mère, on mélange la solution mère du polymère, de la composante adhésiphore et de l'agent de couplage dans l'agent fluxant avec le bitume, en opérant à une température comprise entre 100°C et 230°C et sous agitation, ceci étant réalisé par exemple en ajoutant la solution mère au bitume maintenu sous agitation à la température choisie entre 100°C et 230°C, puis on maintient le mélange résultant sous agitation à une température comprise entre 100 et 230°C, par exemple à la température utilisée pour effectuer le mélange du bitume et de la solution mère, pendant une durée au moins égale à 10 minutes et généralement allant de 10 à 180 minutes, pour permettre, par le biais de l'agent de couplage, le greffage de la composante adhésiphore à la composante bitume/polymère et plus particulièrement aux chaînes du polymère présent dans le milieu réactionnel et, le cas échéant, le pontage des chaînes du polymère entre elles et/ou avec le bitume.

La quantité de solution mère mélangée au bitume est choisie pour fournir les quantités désirées, par rapport au bitume, de polymère, de composante adhésiphore et d'agent de couplage, lesdites quantités étant dans les fourchettes définies précédemment.

Une forme de mise en oeuvre avantageuse pour la préparation de compositions bitume/polymère selon l'invention renfermant un agent de fluxage du type huile hydrocarbonée, en faisant appel à la technique de la solution mère, consiste a mettre en contact, à une température comprise entre 100°C et 230°C et sous agitation, de 80 à 95% en poids du bitume avec 20 à 5% en poids de la solution mère, cette dernière renfermant, en poids de l'huile hydrocarbonée servant d'agent fluxant, 10 à 35% de polymère, 1 à 20% de composante adhésiphore et 0,05 à 5% d'agent de couplage, puis à maintenir le mélange ainsi réalisé sous agitation à une température comprise entre 100°C et 230°C, et de préférence à la température utilisée pour la mise en contact du bitume avec la solution mère, pendant une durée au moins égale à 10 minutes et, notamment, comprise entre 10 et 90 minutes, pour permettre à l'agent de couplage d'agir.

Le bitume, le polymère, la composante adhésiphore et l'agent fluxant, lorsqu'il est utilisé, sont avantageusement choisis parmi les produits qui ont été définis plus haut.

L'agent de couplage fournissant du soufre libre peut consister en un produit choisi parmi le soufre élémentaire, les polysulfures d'hydrocarbyle, les accélérateurs de vulcanisation donneurs de soufre, les mélanges de tels produits entre eux et/ou avec des accélérateurs de vulcanisation non donneurs de soufre. En particulier, l'agent de couplage est choisi parmi les produits M, qui renferment, en poids, de 0% à 100% d'une composante A consistant en un ou plusieurs accélérateurs de vulcanisation donneurs de soufre et de 100% à 0% d'une composante B consistant en un ou plusieurs agents de vulcanisation choisis parmi le soufre élémentaire et les polysulfures d'hydrocarbyle, et les produits N, qui renferment une composante C consistant en un ou plusieurs accélérateurs de vulcanisation non donneurs de soufre et un produit M dans un rapport pondéral de la composante C au produit M allant de 0,01 à 1 et de préférence de 0,05 à 0,5.

Le soufre élémentaire susceptible d'être utilisé pour constituer, en partie ou en totalité, l'agent de couplage est avantageusement du soufre en fleur et de préférence du soufre cristallisé sous la forme orthorhombique et connu sous le nom de soufre alpha.

Les polysulfures d'hydrocarbyle susceptibles d'être utilisés pour former au moins une partie de l'agent de couplage répondent à la formule générale

$$R_7 - (S)_v - (R_9 - (S)_v)_w - R_8$$

dans laquelle $R_7$ et $R_8$ désignent chacun un radical hydrocarboné monovalent, saturé ou insaturé, en $C_1$ à $C_{20}$ ou sont reliés entre eux pour constituer un radical hydrocarboné divalent en $C_2$ à $C_{20}$, saturé ou insaturé, formant un cycle avec les autres groupements d'atomes associés dans la formule, $R_9$ est un radical hydrocarboné divalent, saturé ou insaturé, en $C_1$ à $C_{20}$, les $-(S)_v-$ représentent des groupements divalents formés chacun de v atomes de soufre, les v pouvant être différents de l'un desdits groupements à l'autre et désignant des nombres entiers allant de 1 à 6 avec au moins l'un des v égal ou supérieur à 2, et w représente un nombre entier prenant les valeurs de zéro à 10.

Dans la formule précitée, les radicaux hydrocarbonés monovalents $R_7$ et $R_8$ en $C_1$ à $C_{20}$ ainsi que le radical

hydrocarboné divalent $R_9$ en $C_1$ à $C_{20}$ sont choisis notamment parmi les radicaux aliphatiques, alicycliques ou aromatiques. Lorsque les radicaux $R_7$ et $R_8$ sont reliés entre eux pour constituer un radical hydrocarboné divalent en $C_2$ à $C_{20}$ formant un cycle avec les autres groupements d'atomes associés dans la formule, ledit radical divalent est similaire au radical $R_9$ et peut être également du type aliphatique, alicyclique, ou aromatique. En particulier les radicaux $R_7$ et $R_8$ sont identiques et choisis parmi les radicaux alkyles en $C_1$ à $C_{20}$, par exemple éthyle, propyle, hexyle, octyle, nonyle, décyle, dodécyle linéaire, tertio-dodécyle, hexadécyle, octadécyle et les radicaux cycloalkyles et aryles en $C_6$ à $C_{20}$, notamment benzyle, phényle, tolyle, cyclohexyle, tandis que le radical $R_9$ ou le radical divalent formé par la réunion de $R_7$ et $R_8$ sont choisis parmi les radicaux alkylènes en $C_1$ à $C_{20}$ ou les radicaux cycloalkylènes ou arylènes, notamment phénylène, tolylène, cyclohexylène, en $C_6$ à $C_{20}$.

Des polysulfures utilisables suivant l'invention sont en particulier ceux définis par la formule $R_7\text{-}(S)_u\text{-}R_8$ dans laquelle $R_7$ et $R_8$ désignent chacun un radical hydrocarboné monovalent, saturé ou insaturé, en $C_1$ à $C_{20}$ ou sont reliés entre eux pour former un radical divalent $R_9$ en $C_1$ à $C_{20}$, $R_7$, $R_8$ et $R_9$ ayant les significations précédentes, $\text{-}(S)_u\text{-}$ représente un groupement divalent formé par un enchaînement de u atomes de soufre , u étant un nombre entier allant de 2 à 6.

Des polysulfures préférés répondent à la formule générale $R_{10}\text{-}(S)_t\text{-}R_{10}$ dans laquelle $R_{10}$ désigne un radical alkyle en $C_6$ à $C_{16}$, et $\text{-}(S)_t\text{-}$ représente un groupement divalent formé par un enchaînement de t atomes de soufre, t étant un nombre entier allant de 2 à 5. Des exemples de tels polysulfures sont notamment disulfure de dihexyle, disulfure de dioctyle, disulfure de didodécyle, disulfure de ditertiododécyle, disulfure de dihexadécyle, trisulfure de dihexyle, trisulfure de dioctyle, trisulfure de dinonyle, trisulfure de ditertiododécyle, trisulfure de dihexadécyle, tétrasulfure de dihexyle, tétrasulfure de dioctyle, tétrasulfure de dinonyle, tétrasulfure de ditertiododécyle, tétrasulfure de dihexadécyle, pentasulfure de dihexyle, pentasulfure de dioctyle, pentasulfure de dinonyle, pentasulfure de ditertiododécyle, pentasulfure de dihexadécyle.

D'autre polysulfures, qui peuvent être utilisés suivant l'invention, sont par exemple tels que trisulfure de diphényle, trisulfure de dibenzyle, tétrasulfure de diphényle, tétrasulfure d'orthotolyle, tétrasulfure de dibenzyle, pentasulfure de dibenzyle, pentasulfure de diallyle, tétraméthyltétrathiane.

Les accélérateurs de vulcanisation donneurs de soufre peuvent être choisis, en particulier, parmi les polysulfures de thiurame de formule générale

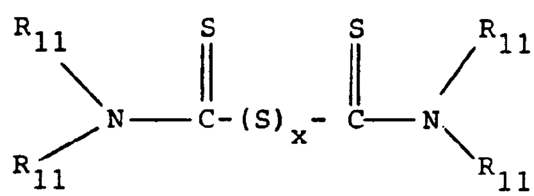

dans laquelle les $R_{11}$, identiques ou différents, représentent chacun un radical hydrocarboné en $C_1$ à $C_{12}$ et de préférence en $C_1$ à $C_8$, notamment un radical alkyle, cycloalkyle ou aryle, ou bien deux radicaux, $R_{11}$ fixés à un même atome d'azote sont reliés entre eux pour former un radical divalent hydrocarboné en $C_2$ à $C_8$ et x est un nombre allant de 2 à 8. Comme exemples de tels accélérateurs de vulcanisation on peut citer notamment les composés disulfure de dipentaméthylène thiurame, tétrasulfure de dipentaméthylène thiurame, hexasulfure de dipentaméthylène thiurame, disulfure de tétrabutylthiurame, disulfure de tétraéthylthiurame et disulfure de tétraméthylthiurame.

Comme autres exemples d'accélateurs de vulcanisation donneurs de soufre on peut encore citer les disulfures d'alkylphénols et les disulfures tels que disulfure de morpholine et N,N'-disulfure de caprolactame.

Les accélérateurs de vulcanisation non donneurs de soufre peuvent être des composés soufrés choisis notamment parmi le mercaptobenzothiazole et ses dérivés, les dithiocarbamates de formule générale (I)

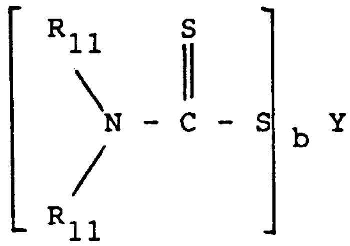 (I)

dans laquelle les $R_{11}$, identiques ou différents, ont la signification donnée plus haut, Y représente un métal et b désigne la valence de Y, et les monosulfures de thiurame de formule générale (II)

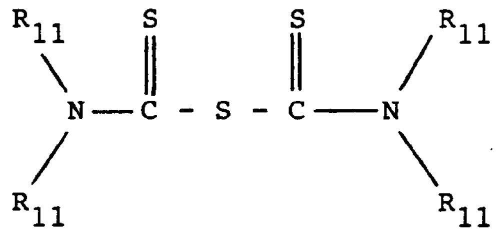 (II)

dans laquelle les $R_{11}$, identiques ou différents, ont la signification donnée plus haut.

Des exemples d'accélérateurs de vulcanisation du type des mercaptobenzothiazoles peuvent être tels que mercaptobenzothiazole, benzothiazole thiolate de zinc, benzothiazole thiolate de sodium, disulfure de benzothiazyle, benzothiazole thiolate de cuivre, N,N'-diéthylthiocarbamyle sulfure de benzothiazyle et les benzothiazolesulfénamides telles que 2-benzothia- zolediéthylsulfénamide, 2-benzothiazolepentaméthylènesulfénamide, 2-benzothiazolecyclohexylsulfénamide, N-oxydiéthylène 2-benzothiazolesulfénamide, N-oxydiéthylène 2-benzothiazolethiosulfénamide, 2-benzothiazoledicyclohexylsulfénamide, 2-benzothiazolediisopropylsulfénamide, 2-benzothiazoletertiobutylsulfénamide, N-oxydiéthylènethiocarbamyl N'-oxydiethylènesulfénamide.

Parmi les accélérateurs de vulcanisation du type des dithiocarbamates de formule générale (I), on peut citer en particulier les composés diméthyldithiocarbamate de bismuth, diamyldithiocarbamate de cadmium, diéthyldithiocarbamate de cadmium, diméthyldithiocarbamate de cuivre, dibutyldithiocarbamate de zinc, diamyldithiocarbamate de plomb, diméthyldithiocarbamate de plomb, pentaméthylènedithiocarbamate de plomb, diméthyldithiocarbamate de sélénium, diéthyldithiocarbamate de tellure, diamyldithiocarbamate de zinc, dibenzyldithiocarbamate de zinc, diéthyldithiocarbamate de zinc, diméthyldithiocarbamate de zinc et pentaméthylènedithiocarbamate de zinc.

A titre d'exemples de monosulfures de thiurame répondant à la formule (II), on peut citer les composés tels que monosulfure de dipentaméthylènethiurame, monosulfure de tétrabutylthiurame, monosulfure de tétraéthylthiurame et monosulfure de tétraméthylthiurame.

D'autres accélérateurs de vulcanisation non donneurs de soufre, qui n'appartiennent pas aux familles définies plus haut, peuvent être également utilisés. De tels accélérateurs de vulcanisation peuvent être tels que diphényl-1,3 guanidine, diorthotolylguanidine et oxyde de zinc, ce dernier composé pouvant être employé éventuellement en présence d'acides gras du type acide stéarique, acide éthylcaproïque, acide laurique.

Avantageusement les accélérateurs de vulcanisation donneurs de soufre utilisables selon l'invention sont tels que disulfure de tétraméthylthiurame, disulfure de tétraéthylthiurame et tétrasulfure de dipentaméthylènethiurame et les accélérateurs de vulcanisation non donneurs de soufre sont tels que 2-mercaptobenzothiazole, disulfure de dibenzothiazyle, benzothiazolethiolate de zinc, 2-benzothiazolecyclohexylsulfénamide, N-oxydiéthylène 2-benzothiazolesulfénamide, 2-benzothiazolediisopropylsulfénamide, 2-benzothiazoledicyclohexylsulfénamide, diméthyldithiocarbamate de zinc, diéthyldithiocarbamate de zinc, dibutyldithiocarbamate de zinc, monosulfure de tétraméthylthiurame, diorthotolylguanidine, disulfure de morpholine et oxyde de zinc.

Des additifs appropriés peuvent encore être incorporés au milieu réactionnel donnant naissance à la composition bitume/polymère selon l'invention. Ainsi on peut ajouter audit milieu des composés insaturés tels que l'anhydride maléique en quantité représentant 0,05 à 0,5 % en poids du bitume.

La composition bitume/polymère selon l'invention, qui présente une adhésivité se conservant au stockage à température élevée, est utilisable pour la réalisation de revêtements et en particulier de revêtements superficiels routiers, d'enrobés ou encore de revêtements d'étanchéité.

L'invention est illustrée par les exemples suivants donnés à titre non limitatif.

Dans ces exemples, qui décrivent l'obtention de compositions bitume/polymère selon l'invention et de compositions bitume/polymère témoins, l'adhésivité des compositions bitume/polymère, après stockage pendant des durées variables, a été appréciée en faisant appel à l'un ou l'autre des deux essais suivants.

. Essai d'adhésion globale à la plaque VIALIT modifié

. But de l'essai :

Cet essai est destiné à apprécier l'adhésivité de granulats et leur accrochage au liant (composition bitume/ polymère) répandu dans le cas de revêtements superficiels. Cet essai, pratiqué avec des granulats secs et propres est un essai d'adhésion globale.

. Mise en oeuvre de l'essai modifié

Une quantité déterminée de liant est répandue sur une plaque en acier de dimensions 200 x 200 mm et 2 mm d'épaisseur.

On gravillonne sur le liant 100 granulats calibrés 10/14 mm.

Le granulat est mis en place à l'aide d'un cylindre à bandage de caoutchouc avec lequel on effectue 6 passages sur la plaque (trois dans un sens, puis trois perpendiculairement à la première direction).

On immerge la plaque recouverte de granulats ainsi préparée dans un bain d'eau à 25°C pendant 48 heures.

La plaque retirée de l'eau est posée sur un support à trois pointes, les gravillons se trouvant à la partie inférieure de la plaque, et l'on fait tomber une bille d'acier de 500g sur la plaque, d'une hauteur de 50 cm et ceci trois fois en 10 secondes.

La valeur de l'adhésivité est exprimée par le nombre de granulats tachés par le liant, collés à la plaque ou non.

. Essai de tenue d'un film de liant hydrocarboné en présence d'eau (essai d'adhésivité passive) :

. But de l'essai :

Evaluation empirique de l'affinité réciproque, en présence d'eau, d'un liant hydrocarboné pour des granulats. Cet essai est un essai d'adhésion passive, c'est-à-dire qu'il permet de s'assurer que l'eau ne déplacera pas le liant de la surface des granulats enrobés.

. Exécution de l'essai :

Cet essai, qui consiste à immerger dans l'eau, dans des conditions déterminées, des granulats enrobés d'un liant hydrocarboné (composition bitume/ polymère) et à évaluer le pourcentage de surface recouverte de liant, après un certain temps d'immersion, est mis en oeuvre comme suit :

On verse 100g de granulats 4/6,3 mm dans une capsule maintenue sur une plaque chauffante et renfermant 5g du liant et mélange intimement ces deux produits dans la capsule au moyen d'un agitateur, puis on introduit le mélange obtenu dans un bécher que l'on recouvre d'un verre de montre et laisse reposer une demiheure.

On verse ensuite dans le bécher 300 ml d'eau déminéralisée à 60°C, puis recouvre le bécher d'un verre de montre et maintient l'ensemble en atmosphère à 60°C.

On apprécie visuellement les surfaces recouvertes d'un film du liant en donnant un note correspondant à la cotation suivante :

100 - aucune surface découverte
90 - plus de 90 % environ des surface sont recouvertes
75 - 75 à 90 % environ des surfaces sont recouvertes
50 - 50 à 75 % environ des surfaces sont recouvertes
< 50 - moins de 50 % des surfaces sont recouvertes
0 - le liant est séparé des granulats.

Dans les exemples donnés ci-après, les quantités sont exprimées en poids sauf indication contraire.

EXEMPLE 1 :

. Préparation d'une composition selon l'invention :

Dans un réacteur agité maintenu à 180°C, on introduisait 2000 parties d'un bitume de pénétration 80/100 et 62 parties d'un copolymère séquencé styrène/butadiène renfermant 25 % en poids de styrène et présentant une masse moléculaire viscosimétrique d'environ 75 000. Au bout de 2,5 heures, on ajoutait 10 parties d'une composante adhésiphore consistant en N,N-diméthyloléylamide au contenu du réacteur et poursuivait l'agitation à la même température pendant 30 minutes, après quoi on introduisait 2 parties de soufre dans le réacteur. Le milieu réactionnel formé ainsi dans le réacteur était ensuite maintenu à 180°C pendant 1 heure.

La composition bitume/polymère obtenue était placée dans des boîtes métalliques étanches, puis conservée dans ces dernières à 180°C en étuve thermostatée.

Le contenu des boîtes était soumis à l'essai VIALIT modifié d'adhésion globale après des durées variables de stockage à 180°C.

. Préparation d'une composition témoin :

Dans un réacteur agité maintenu à 180°C, on introduisait 2000 parties d'un bitume de pénétration 80/100 et 62 parties d'un copolymère séquencé styrène/butadiène renfermant 25 % en poids de styrène et présentant une masse moléculaire viscosimétrique d'environ 75000. Au bout de 2,5 heures, on ajoutait 2 parties de soufre au contenu du réacteur. Le milieu réactionnel ainsi formé dans le réacteur était maintenu à 180°C pendant 1 heure. Au contenu du réacteur on ajoutait alors 10 parties d'une composante adhésiphore consistant en N,N-diméthyloléylamide, puis après dissolution de ladite composante dans la composition bitume/polymère on plaçait le produit résultant dans des boîtes métalliques étanches que l'on conservait à 180°C en étuve thermostatée.

Le contenu des boîtes renfermant la composition bitume/polymère témoin était également soumis à l'essai VIALIT modifié d'adhésion globale après des durées variables de stockage à 180°C.

Les résultats des essais VIALIT d'adhésion globale pratiqués sur la composition bitume/polymère selon l'invention et sur la composition bitume/polymère témoin sont présentés dans le tableau I.

La comparaison des résultats figurant au tableau I met en évidence l'adhésivité substantiellement améliorée au stockage de la composition bitume/polymère selon l'invention pour laquelle l'agent adhésifore est fixé irréversiblement par greffage au sein de la composition bitume/polymère.

TABLEAU I

| COMPOSITION | INVENTION | | | | | TEMOIN | | | | |
|---|---|---|---|---|---|---|---|---|---|---|
| Durée du Stockage à 180°C (jours) | 0 | 5 | 15 | 30 | 60 | 0 | 5 | 15 | 30 | 60 |
| ADHESIVITE* | | | | | | | | | | |
| Calcaire | 100 | 100 | 100 | 100 | 100 | <75 | <75 | <50 | <<50 | <<50 |
| Diorite | 100 | 100 | 100 | 100 | 100 | <75 | <75 | <50 | <<50 | <<50 |
| Silex | 100 | 100 | 100 | 100 | 100 | <50 | <50 | <<50 | <<50 | <<50 |
| Quartzite | 100 | 100 | 100 | 100 | 100 | <50 | <50 | <<50 | <<50 | <<50 |

*). Essai d'adhésion globale à la plaque VIALIT modifié.

EXEMPLE 2 :

. Préparation d'une composition selon l'invention :

Dans un réacteur agité maintenu à 180°C, on introduisait 2000 parties d'un bitume de pénétration 180/220 et 106 parties d'un copolymère séquencé styrène/butadiène renfermant 30 % en poids de styrène et présentant une masse moléculaire viscosimétrique d'environ 150 000. Au bout de 3 heures de dissolution, on ajoutait 13 parties d'une composante adhésiphore consistant en 2,4,6-décatriénylamine au contenu du réacteur et poursuivait l'agitation à la même température pendant 30 minutes. On introduisait alors 11 parties de pentasulfure de dinonyle dans le réacteur. Le milieu réactionnel ainsi constitué dans le réacteur était ensuite maintenu à 180°C pendant deux heures.

La composition bitume/polymère obtenue était placée dans des boîtes métalliques étanches, puis conservée dans ces dernières à 180°C en étuve thermostatée.

Le contenu des boîte était soumis à l'essai VIALIT modifié d'adhésion globale après des durées variables de stockage à 180°C.

. Préparation d'une composition témoin :

Dans un réacteur agité maintenu à 180°C, on introduisait 2000 parties d'un bitume de pénétration 180/220 et 106 parties du copolymère séquencé styrène/butadiène décrit ci-dessus. Après 3 heures de dissolution, on ajoutait 11 parties de pentasulfure de dinonyle au contenu du réacteur.
Le mélange réactionnel ainsi formé dans le réacteur était maintenu à 180°C pendant 2 heures. Au contenu du réacteur on ajoutait alors 10 parties d'une composante adhésiphore consistant en 2,4,6-décatriénylamine, puis après dissolution de ladite composante dans le milieu on plaçait le produit résultant dans des boîtes métalliques étanches que l'on conservait à 180°C en étuve thermostatée.

Le contenu des boîtes renfermant la composition témoin était également soumis à l'essai d'adhésion globale à la plaque VIALIT modifié.

Les résultats des essais VIALIT d'adhésion globale pratiqués sur la composition bitume/polymère selon l'invention et sur la composition bitume/polymère témoin sont présentés dans le tableau II.

TABLEAU II

| COMPOSITION | INVENTION | | | | | TEMOIN | | | | |
|---|---|---|---|---|---|---|---|---|---|---|
| DUREE DU STOCKAGE A 180°C (jours) | 0 | 5 | 15 | 30 | 60 | 0 | 5 | 15 | 30 | 60 |
| ADHESIVITE* | | | | | | | | | | |
| Calcaire | 98 | 98 | 99 | 97 | 97 | 99 | 38 | 6 | 3 | 0 |
| Silex | 100 | 99 | 100 | 100 | 99 | 100 | 32 | 5 | 2 | 0 |

*) - Essai d'adhésion globale à la plaque VIALIT modifié

La comparaison des résultats figurant au tableau II fait encore apparaître l'adhésivité fortement améliorée au stockage de la composition bitume/polymère selon l'invention.

EXEMPLE 3 :

. Préparation d'une composition selon l'invention :

Dans un réacteur agité maintenu à 180°C, on introduisait 2000 parties d'un bitume de pénétration 80/100 et 62 parties d'un copolymère séquencé styrène/butadiène renfermant 25% en poids de styrène et présentant une masse moléculaire viscosimétrique d'environ 120 000. Après 2,5 heures d'agitation pour dissoudre le copolymère dans le bitume, on ajoutait au contenu du réacteur 1,1 partie d'anhydride maléique, 4,8 parties d'amine de suif et 1,6 parties de soufre.

Le milieu réactionnel ainsi constitué était ensuite maintenu à 180°C pendant deux heures pour mettre en oeuvre les réactions de greffage et de pontage initiées par le soufre.

La composition bitume/polymère obtenue était soumise à l'essai d'adhésion globale à la plaque VIALIT modifié immédiatement après sa fabrication et également après stockage d'un mois dans un récipient hermétique maintenu à 160°C.

Les valeurs d'adhésivité immédiate et après stockage, exprimées dans la cotation de l'essai, étaient égales respectivement à 98 et 96.

EXEMPLE 4 :

. Préparation d'une composition selon l'invention

On préparait tout d'abord une solution mère en opérant comme suit. Dans un réacteur agité maintenu entre 80°C et 100°C on introduisait 238,5 parties d'une coupe pétrolière de caractère naphténoaromatique présentant un intervalle de distillation suivant la norme ASTM D 86-67 allant de 200°C à 350°C, puis 53,7 parties d'un copolymère séquencé styrène/butadiène renfermant 30% en poids de styrène et possédant une masse moléculaire viscosimétrique d'environ 120000. Après deux heures d'agitation à la température d'opération pour dissoudre le copolymère, on ajoutait 6 parties de suif propylène triamine et 1,2 parties de soufre.

On introduisait 300 parties de la solution mère obtenue dans un réacteur agité maintenu à 160°C et contenant 1700 parties d'un bitume de pénétration 80/100. Le milieu réactionnel ainsi constitué était maintenu ensuite pendant 1 heure à une température de 170°C pour mettre en oeuvre les réactions de greffage et de pontage par le soufre.

La composition bitume/polymère ainsi produite était alors stockée en récipients hermétiques maintenus à

160°C dans une étuve thermostatée.

La composition bitume/polymère stockée était soumise à l'essai d'adhésivité passive après des durées variables de stockage.

. Préparation d'une composition témoin

On préparait une solution mère comme indiqué dans la première partie de l'exemple, mais sans utiliser de composante adhésiphore (suif propylène triamine).

On introduisait 300 parties de la solution mère dans un réacteur agité maintenu à 160°C et contenant 1700 parties d'un bitume de pénétration 80/100. Le milieu réactionnel ainsi constitué était maintenu ensuite pendant 1 heure à environ 170°C. La phase de réaction étant terminée, on introduisait dans le réacteur 6 parties de la composante adhésiphore (suif propylène triamine). Après dissolution de ladite composante, la composition obtenue était stockée en récipients hermétiques maintenus à 160°C en étuve thermostatée.

La composition bitume/polymère témoin stockée était également soumise à l'essai d'adhésivité passive après des durées variables de stockage.

Les résultats des essais d'adhésivité passive pratiqués sur la composition bitume/polymère selon l'invention et sur la composition bitume/polymère témoin sont rassemblés dans le tableau III.

La comparaison des résultats présentés dans le tableau III fait encore apparaître l'adhésivité améliorée au stockage à température élevée de la composition bitume/polymère selon l'invention.

TABLEAU III

| | Durée du stockage à 160°C (jours) | | | | | | | | |
|---|---|---|---|---|---|---|---|---|---|
| INVENTION | 0 | 6 | 14 | 22 | 28 | 36 | 43 | 59 | 65 |
| ADHESIVITE PASSIVE (% de surface couverte) | | | | | | | | | |
| Calcaire | 50 | 50 | 50 | 50 | 50 | 50 | 75 | 75 | 75 |
| Quartzite | 90 | 90 | 90 | 90 | 90 | 90 | 90 | 90 | 90 |
| Silice | 90 | 90 | 90 | 90 | 90 | 90 | 90 | 90 | 90 |
| Diorite | 90 | 90 | 90 | 90 | 90 | 90 | 90 | 90 | 90 |

| | Durée du stockage à 160°C (jours) | | | | |
|---|---|---|---|---|---|
| TEMOIN | 0 | 1 | 3 | 5 | 8 |
| ADHESIVITE PASSIVE (% de surface courverte) | | | | | |
| Calcaire | 50 | 50 | <50 | <50 | <50 |
| Quartzite | 90 | 90 | 75 | 50 | <50 |
| Silice | 90 | 75 | 50 | 50 | <50 |
| Diorite | 90 | 90 | 75 | 75 | 75 |

EXEMPLE 5 :

On préparait une composition selon l'invention en opérant comme suit :

Dans un réacteur agité maintenu à 180°C, on introduisait 2000 parties d'un bitume de pénétration 180/220 et 70 parties du copolymère séquencé utilisé dans l'exemple 3. Après 2,5 heures d'agitation pour dissoudre le copolymère dans le bitume, on ajoutait au contenu du réacteur 15,7 parties d'amine de coprah et 1,7 parties de soufre. Le milieu réactionnel ainsi constitué était ensuite maintenu à 180°C pendant deux heures pour mettre en oeuvre les réactions de greffage et de pontage initiées par le soufre.

La composition bitume/polymère ainsi produite était alors stockée en récipients hermétiques maintenus à

160°C en étuve thermostatée.

La composition bitume/polymère ainsi stockée était soumise à l'essai d'adhésivité passive après des durées variables de stockage à 160°C.

Les résultats dudit essai sont présentés dans le tableau IV.

TABLEAU IV

| Durée du stockage à 160°C (jours) | Adhésivité passive (% de surface couverte) | | | |
|---|---|---|---|---|
| | Calcaire | Quartzite | Silice | Diorite |
| 0 | 75 | 90 | 90 | 90 |
| 7 | 75 | 90 | 90 | 90 |
| 15 | 75 | 90 | 75 | 90 |

## Revendications

1. Procédé pour la préparation d'une composition bitume/polymère, dans lequel on met en contact, en opérant à une température comprise entre 100°C et 230°C et sous agitation pendant une durée d'au moins 10 minutes, un bitume et, comptés en poids du bitume, 0,5 à 15% d'un polymère et 0,05 à 10% d'une composante azotée consistant en un ou plusieurs composés azotés ayant une masse moléculaire supérieure à 90 et l'on réalise ladite mise en contact en présence d'un agent de couplage fournissant du soufre libre élémentaire ou radicalaire, ledit agent de couplage étant présent dans le milieu renfermant le bitume, le polymère et la composante azotée en quantité propre à fournir une quantité de soufre libre représentant 0,1 à 10% du poids global de polymère et de composante azotée dans ledit milieu, caractérisé en ce que la composante azotée est une composante adhésiphore renfermant un ou plusieurs composés choisis parmi les composés de formule générale $R\text{-}Z\text{-}R_1$ et leurs sels, avec dans cette formule R désignant un radical hydrocarboné aliphatique monovalent en $C_3$ à $C_{30}$ renfermant une ou plusieurs insaturations, Z représentant un groupement divalent choisi parmi

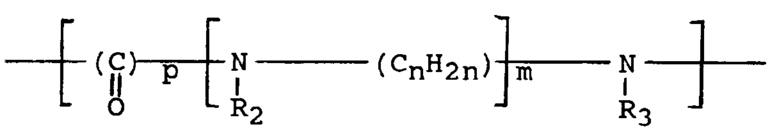

et

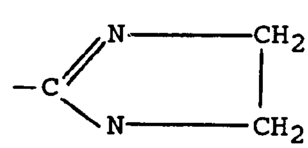

,

où n désigne un nombre entier allant 2 à 6, m représente zéro ou un nombre entier allant de 1 à 6 et p est égal à zéro ou 1, et $R_1$, $R_2$ et $R_3$ identiques ou différents représentent chacun un atome d'hydrogène, un radical choisi parmi les radicaux R, un radical alkyle, aminoalkyle ou hydroxyalkyle en $C_1$ à $C_{18}$ ou un radical $-(C_q H_{2q} O)_r H$ avec q désignant un nombre égal à 2 ou 3 et r représentant un nombre entier allant de 2 à 10.

2. Procédé selon la revendicaiton 1, caractérisé en ce que l'agent de couplage est utilisé en proportion propre à fournir une quantité de soufre libre représentant 0,5 à 8% du poids global de polymère et de composante adhésiphore dans le milieu réactionnel.

3. Procédé selon la revendication 1 ou 2, caractérisé en ce que dans la formule des composés formant la composante adhésiphore, les radicaux $R_1$, $R_2$ et $R_3$, identiques ou différents, représentent chacun un radical alkyle, aminoalkyle ou hydroxyalkyle en $C_1$ à $C_{12}$ et, dans les formules du groupement divalent Z, n est un nombre entier allant de 2 à 4 et m est un nombre entier allant de 1 à 4.

4. Procédé selon l'une des revendications 1 à 3 caractérisé en ce que dans la formule générale R - Z - $R_1$ des composés formant la composante adhésiphore, le radical R est un radical alcényle, alcadiényle, alcatriényle, alcatétraényle ou encore alcapentaényle.

5. Procédé selon l'une des revendications 1 à 4, caractérisé en ce que dans la formule générale R - Z - $R_1$ des composés formant la composante adhésiphore, le radical R est en $C_8$ à $C_{20}$.

6. Procédé selon l'une des revendications 1 à 5, caractérisé en ce que le ou les composés formant la composante adhésiphore sont des dérivés répondant à l'une ou l'autre des formules

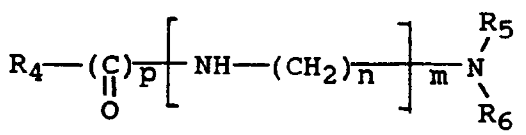

et

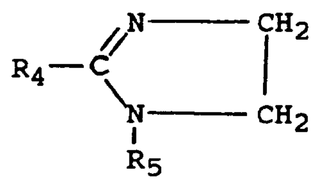

dans lesquelles $R_4$ désigne un radical hydrocarboné aliphatique monovalent en $C_8$ à $C_{20}$ possédant une ou plusieurs insaturations du type

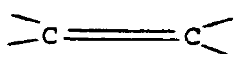

,

les symboles $R_5$ et $R_6$, identiques ou différents, désignent chacun un atome d'hydrogène ou un radical alkyle, aminoalkyle ou hydroxyalkyle en $C_1$ à $C_8$ et m, n et p sont définis comme dans la revendication 1.

7. Procédé selon l'une des revendications 1 à 6, caractérisé en ce que le bitume a une pénétration, suivant la norme NF T 66004, comprise entre 5 et 500.

8. Procédé selon l'une des revendications 1 à 7, caractérisé en ce que le polymère utilisé est un copolymère choisi parmi les copolymères statistiques ou séquencés de styrène avec un diène conjugué.

9. Procédé selon la revendication 8, caractérisé en ce que ledit diène est choisi parmi butadiène, isoprène, chloroprène, butadiène carboxylé et isoprène carboxylé.

10. Procédé selon la revendication 8 ou 9, caractérisé en ce que le copolymère de styrène et de diène conjugué a une teneur pondérale en styrène allant de 15 à 40%.

11. Procédé selon l'une des revendications 8 à 10, caractérisé en ce que le copolymère possède une masse moléculaire viscosimétrique moyenne comprise entre 30000 et 300000.

12. Procédé selon la revendication 11 caractérisé en ce que ladite masse moléculaire est comprise entre 70000 et 200000.

13. Procédé selon l'une des revendications 1 à 12, caractérisé en ce que le polymère et la composante adhésiphore sont utilisés en quantités représentant respectivement 0,7 à 10% et 0,1 à 5% du poids du bitume.

**14.** Procédé selon l'une des revendications 1 à 13, caractérisé en ce que le milieu réactionnel résultant de la mise en contact du bitume, du polymère, de la composante adhésiphore et de l'agent de couplage renferme également 1 à 30%, en poids du bitume, d'un agent fluxant.

**15.** Procédé selon la revendication 14, caractérisé en ce que l'agent fluxant est une huile hydrocarbonée présentant un intervalle de distillation à pression atmosphérique, déterminé selon la norme ASTM D86-87, compris entre 100°C et 450°C.

**16.** Procédé selon l'une des revendications 1 à 15, caractérisé en ce que l'on réalise tout d'abord, à une température comprise entre 100°C et 230°C et sous agitation, un mélange des divers ingrédients destinés à constituer le mélange réactionnel, puis on maintient le mélange réactionnel obtenu, dans ledit intervalle de température pendant une durée allant de 10 à 180 minutes.

**17.** Procédé selon la revendication 16, caractérisé en ce que la constitution du mélange réactionnel à partir des ingrédients le composant est effectuée en mettant tout d'abord en contact le polymère avec le bitume jusqu'à l'obtention d'un mélange homogène, puis en incorporant les ingrédients restants audit mélange de bitume et de polymère.

**18.** Procédé selon l'une des revendications 14 à 16, caractérisé en ce que le polymère, l'agent de couplage et éventuellement la composante adhésiphore sont incorporés au bitume sous la forme d'une solution mère de ces produits dans l'agent fluxant, la composante adhésiphore, si elle n'est pas présente dans la solution mère, étant incorporée au bitume avant, pendant ou après incorporation de la solution mère à ce dernier.

**19.** Procédé selon la revendication 18, caractérisé en ce que les quantités respectives de polymère, de composante adhésiphore et d'agent de couplage dans la solution mère représentent 5 à 40%, 0,5 à 25% et 0,01 à 10% du poids de l'agent de fluxage.

**20.** Procédé selon la revendication 19, caractérisé en ce que les quantités respectives de polymère, de composante adhésiphore et d'agent de couplage dans la solution mère représentent 10 à 35%, 1 à 20% et 0,05 à 5% du poids de l'agent de fluxage.

**21.** Procédé selon la revendication 20, caractérisé en ce que l'on met en contact 80 à 95% en poids de bitume avec 20 à 5% en poids de la solution mère pour former le mélange réactionnel.

**22.** Procédé selon l'une des revendications 1 à 21, caractérisé en ce que l'agent de couplage est choisi parmi (i) les produits M, qui renferment, en poids, de 0 à 100% d'une composante A consistant en un ou plusieurs accélérateurs de vulcanisation donneurs de soufre et de 100% à 0% d'une composante B consistant en un ou plusieurs agents choisi parmi le soufre élémentaire et les polysulfures d'hydrocarbyle, et (ii) les produits N, qui renferment une composante C consistant en un ou plusieurs accélérateurs de vulcanisation non donneurs de soufre et un produit M dans un rapport pondéral de la composante C au produit M allant de 0,01 à 1.

**23.** Procédé selon la revendication 22, caractérisé en ce que l'agent de couplage consiste en soufre élémentaire.

**24.** Procédé selon la revendication 22, caractérisé en ce que l'agent de couplage consiste en un ou plusieurs polysulfures d'hydrocarbyle de formule

$$R_7 - (S)_v - \left( R_9 - (S)_v \right)_w - R_8$$

dans laquelle $R_7$ et $R_8$ désigent chacun un radical hydrocarboné monovalent, saturé ou insaturé, en $C_1$ à $C_{20}$ ou sont reliés entre eux pour constituer un radical hydrocarboné divalent en $C_2$ à $C_{20}$, saturé ou insaturé, formant un cycle avec les autres groupements d'atomes associés dans la formule, $R_9$ est un radical hydrocarboné divalent, saturé ou insaturé, en $C_1$ à $C_{20}$, les $-(S)-_v$ représentent des groupements divalents formés chacun de v atomes de soufre, les v pouvant être différents de l'un desdits groupements à l'autre et désignant des nombres entiers allant de 1 à 6 avec au moins l'un des v égal ou supérieur à 2, et w

représente un nombre entier prenant les valeurs de zéro à 10.

**25.** Procédé selon la revendication 24, caractérisé en ce que le ou ledits polysulfures d'hydrocarbyle répondent à la formule $R_{10}-(S)_t-R_{10}$, dans laquelle $R_{10}$ désigne un radical alkyle en $C_6$ à $C_{16}$ et $-(S)_t-$ représente un groupement divalent formé par un enchaînement de t atomes de soufre, t étant un nombre entier allant de 2 à 5.

**26.** Procédé selon la revendication 22, caractérisé en ce que l'agent de couplage consiste en ou renferme une composante A constituée d'un ou plusieurs accélérateurs de vulcanisation donneurs de soufre choisis parmi les polysulfures de thiurame de formule

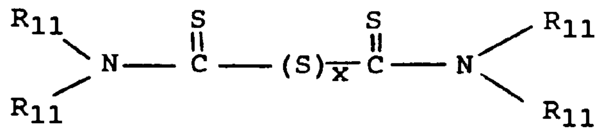

dans laquelle les $R_{11}$, identiques ou différents, représentent chacun un radical hydrocarboné en $C_1$ à $C_{12}$ ou bien deux radicaux $R_{11}$ fixés à un même atome d'azote sont reliés entre eux pour former un radical divalent hydrocarboné en $C_2$ à $C_8$ et x est un nombre allant de 2 à 8, les disulfures d'alkylphénols, le disulfure de morpholine et le N,N'-disulfure de caprolactame.

**27.** Procédé selon la revendication 22, caractérisé en ce que le ou les accélérateurs de vulcanisation non donneurs de soufre susceptibles d'être utilisés pour former la composante C du produit N sont choisis parmi le mercaptobenzothiazole, les benzothiazolésulfenamides, les dithiocarbamates de formule

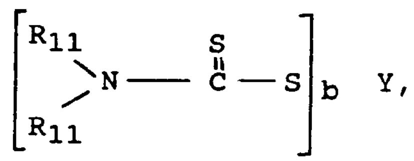

les monosulfures de thiurame de formule

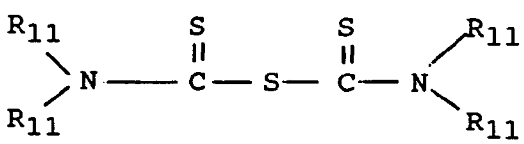

et les produits comprenant la diphényl-l,3 guanidine, la diorthotolylguanidine et l'oxyde de zinc, ce dernier utilisé seul ou en présence d'acides gras, avec dans les formules précitées les $R_{11}$, identiques ou différents, représentant chacun un radical hydrocarboné en $C_1$ à $C_{12}$ ou bien deux radicaux $R_{11}$ fixés à un même atome d'azote sont reliés entre eux pour former un radical hydrocarboné en $C_2$ à $C_8$, Y représentant un métal et b désignant la valence de Y.

**28.** Procédé selon l'une des revendications 1 à 27, caractérisé en ce que le milieu réactionnel donnant naissance à la composition bitume/polymère renferme de l'anhydride maléique en quantité représentant 0,05 à 0,5% en poids du bitume.

**29.** Application de la composition bitume/polymère obtenue par le procédé selon l'une des revendications 1 à 25, à la réalisation de revêtements.

**30.** Application selon la revendication 29, caractérisée en ce que les revêtements réalisés sont des revêtements superficiels routiers, des enrobés ou des revêtements d'étanchéité.

**31.** Composition bitume/polymère du type renfermant un bitume et, comptés en poids du bitume, 0,5 à 15%

d'un polymère et 0,05 à 10% d'une composante azotée, consistant en un ou plusieurs composés azotés ayant une masse moléculaire supérieure à 90, et se caractérisant en ce que la composante azotée est une composante adhésiphore renfermant un ou plusieurs composés greffés sur le polymère présent dans la composition bitume/polymère et choisis parmi les composés de formule générale $R\text{-}Z\text{-}R_1$ et leurs sels avec, dans cette formule, R désignant un radical hydrocarboné aliphatique monovalent en $C_3$ à $C_{30}$ renfermant une ou plusieurs insaturations, Z représentant un groupement divalent choisi parmi

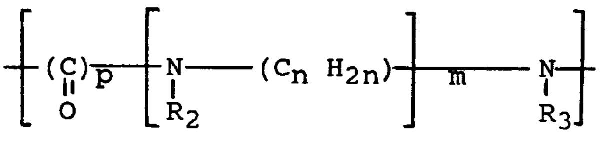 et 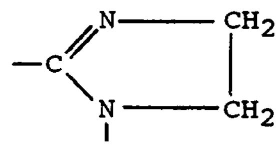

où n désigne un nombre entier allant de 2 à 6, m représente zéro ou un nombre entier allant de 1 à 6 et p est égal à zéro ou 1, et $R_1$, $R_2$ et $R_3$, identiques ou différents, représentent chacun un atome d'hydrogène, un radical choisi parmi les radicaux R, un radical alkyle, aminoalkyle ou hydroxyalkyle en $C_1$ à $C_{18}$ ou un radical $-(C_qH_{2q}O)_r-H$ avec q désignant un nombre égal à 2 ou 3 et r représentant un nombre entier allant de 2 à 10.

**32.** Composition selon la revendication 31, caractérisée en ce que dans la formule $R\text{-}Z\text{-}R_1$ des composés formant la composante adhésiphore, le radical R est un radical alcényle, alcadiényle, alcatriényle, alcatétraényle ou encore alcapentaényle.

**33.** Composition selon la revendication 31 ou 32, caractérisée en ce que dans la formule $R\text{-}Z\text{-}R_1$ des composés formant la composante adhésiphore, le radical R est en $C_8$ à $C_{20}$.

**34.** Composition selon la revendication 31, caractérisée en ce que le ou les composés formant la composante adhésiphore sont des dérivés répondant à l'une ou l'autre des formules définies dans la revendication 6.

**35.** Composition selon l'une des revendications 31 à 34, caractérisée en ce que le bitume qu'elle renferme a une pénétration, suivant la norme NF T 66004, comprise entre 5 et 500.

**36.** Composition selon l'une des revendications 31 à 35, caractérisée en ce que le polymère qu'elle renferme est un copolymère statistique ou séquencé de styrène avec un diène conjugué.

**37.** Composition selon la revendication 36, caractérisée en ce que ledit diène est choisi parmi butadiène, isoprène, chloroprène, butadiène carboxylé et isoprène carboxylé.

**38.** Composition selon la revendication 36 ou 37, caractérisée en ce que le copolymère de styrène et de diène conjugué a une teneur pondérale en styrène allant de 15 à 40%.

**39.** Composition selon l'une des revendications 36 à 38, caractérisée en ce que le copolymère possède une masse moléculaire viscosimétrique moyenne comprise entre 30000 et 300000.

**40.** Composition selon la revendication 39, caractérisée en ce que ladite masse moléculaire est comprise entre 70000 et 200000.

**41.** Composition selon l'une des revendications 31 à 39, caractérisée en ce que les teneurs de la composition en polymère et en composante adhésiphore représentent respectivement 0,7 à 10% et 0,1 à 5% en poids du bitume.

**42.** Composition selon l'une des revendications 31 à 40, caractérisée en ce qu'elle renferme 1 à 30%, en poids du bitume, d'un agent fluxant.

**43.** Composition selon la revendication 42, caractérisée en ce que ledit agent fluxant est une huile hydrocarbonée présentant un intervalle de distillation à pression atmosphérique, déterminé selon la norme ASTM D 86-67, compris entre 100°C et 450°C.

## Patentansprüche

1. Verfahren zur Herstellung eines Gemisches aus Bitumen und Polymer, bei dem man bei einer Temperatur zwischen 100 und 230°C und unter Rühren während einer Zeitdauer von wenigstens 10 Minuten ein Bitumen mit 5,0 bis 15% eines Polymers und 0,05 bis 10%, jeweils bezogen auf das Gewicht des Bitumens, einer Stickstoffkomponente, bestehend aus einer oder mehreren Stickstoffverbindungen mit einer Molekularmasse von über 90, in Berührung bringt und die Kontaktierung in Anwesenheit eines freien Schwefel in elementarer Form oder Radikalform liefernden Kupplungsmittels durchführt, das in dem das Bitumen, das Polymer und die Stickstoffkomponente enthaltenden Medium in einer Menge vorliegt, die geeignet ist, eine Menge an freiem Schwefel von 0,1 bis 10%, bezogen auf das Gesamtgewicht an Polymer und Stickstoffkomponente im Medium, zu liefern, dadurch **gekennzeichnet,** daß die Stickstoffkomponente eine Haftvermögen verleihende Komponente ist, die eine oder mehrere Verbindungen umfaßt, ausgewählt unter den Verbindungen der allgemeinen Formel R-Z-$R_1$ und ihrer Salze, wobei R einen einwertigen aliphatischen $C_{3-30}$-Kohlenwasserstoffrest mit einer oder mehreren Ungesättigtheiten bedeutet, Z für eine zweiwertige Gruppe ausgewählt unter

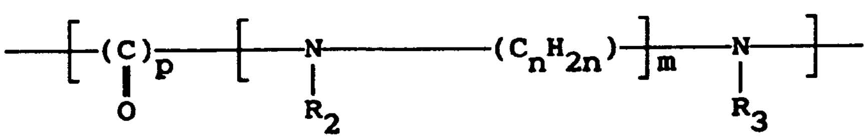

und

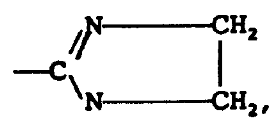

steht, worin n eine ganze Zahl von 2 bis 6, m 0 oder eine ganze Zahl von 1 bis 6 und p 0 oder 1 bedeuten, und $R_1$, $R_2$ und $R_3$ gleich oder verschieden sind und jeweils ein Wasserstoffatom oder einen Rest bedeuten, ausgewählt unter den Resten R, einem $C_{1-18}$-Alkyl, -Aminoalkyl oder -Hydroxyalkyl oder einem Rest

$-(C_q\text{-}H_{2q}\text{-}O)_r\text{—}H$, wobei q 2 oder 3 und r eine ganze Zahl von 2 bis 10 bedeuten.

2. Verfahren nach Anspruch 1, dadurch **gekennzeichnet,** daß das Kupplungsmittel in einer Menge verwendet wird, die geeignet ist, eine Menge an freiem Schwefel von 0,5 bis 8%, bezogen auf das Gesamtgewicht an Polymer und der Haftvermögen verleihenden Komponente im Reaktionsmedium, zu liefern.

3. Verfahren nach einem der Ansprüche 1 oder 2, dadurch **gekennzeichnet,** daß in der Formel der die Haftvermögen verleihende Komponente bildenden Verbindungen die Reste $R_1$, $R_2$ und $R_3$ gleich oder verschieden sein können und $C_{1-12}$-Alkyl, -Aminoalkyl oder -Hydroxyalkyl bedeuten und daß in den Formeln der zweiwertigen Gruppe Z n eine ganze Zahl von 2 bis 4 und m eine ganze Zahl von 1 bis 4 bedeuten.

4. Verfahren nach einem der Ansprüche 1 bis 3, dadurch **gekennzeichnet,** daß in der allgemeinen Formel R-Z-$R_1$ der die Haftvermögen verleihende Komponente bildenden Verbindungen der Rest R für ein Alkenyl, Alkadienyl, Alkatrienyl, Alkatetraenyl oder außerdem Alkapentaenyl steht.

5. Verfahren nach einem der Ansprüche 1 bis 4, dadurch **gekennzeichnet,** daß in der allgemeinen Formel R-Z-$R_1$ der die Haftvermögen verleihende Komponente bildenden Verbindungen der Rest R ein $C_{8-20}$-Rest ist.

6. Verfahren nach einem der Ansprüche 1 bis 5, dadurch **gekennzeichnet,** daß die Verbindung oder die Verbindungen, die die Haftvermögen verleihenden Komponente bilden, Derivate einer der Formeln

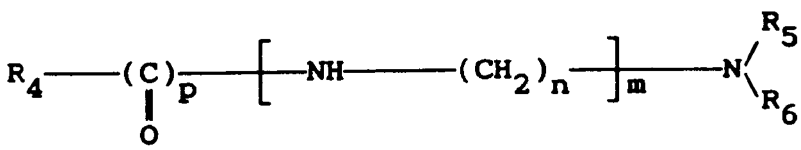

und

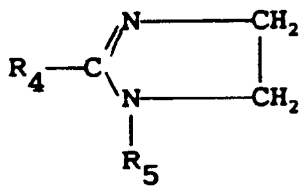

sind, worin $R_4$ einen einwertigen aliphatischen, eine oder mehrere Ungesättigtheiten des Typs

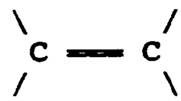

aufweisenden $C_{8-20}$-Kohlenwasserstoffrest bedeuter, die Reste $R_5$ und $R_6$ gleich oder verschieden sein können und jeweils ein Wasserstoffatom, ein $C_{1-18}$-Alkyl, -Aminoalkyl oder -Hydroxyalkyl bedeuten und m, n und p wie in Anspruch 1 definiert sind.

7. Verfahren nach einem der Ansprüche 1 bis 6, dadurch **gekennzeichnet,** daß das Bitumen eine Penetration gemäß der Norm NF T 66004 zwischen 5 und 500 aufweist.

8. Verfahren nach einem der Ansprüche 1 bis 7, dadurch **gekennzeichnet,** daß das verwendete Polymer ein Copolymer ist, ausgewählt unter statistischen Copolymeren oder Blockcopolymeren von Styrol mit einem konjugiertem Dien.

9. Verfahren nach Anspruch 8, dadurch **gekennzeichnet,** daß das Dien ausgewählt wird aus der Gruppe, bestehend aus Butadien, Isopren, Chloropren, Carboxylbutadien und -isopren.

10. Verfahren nach einem der Ansprüche 8 oder 9, dadurch **gekennzeichnet,** daß das Copolymer aus Styrol und konjugiertem Dien einen Gewichtsanteil an Styrol zwischen 15 und 40% aufweist.

11. Verfahren nach einem der Ansprüche 8 bis 10, dadurch **gekennzeichnet,** daß das Copolymer ein Viskositätsmittel des Molekulargewichts zwischen 30.000 und 300.000 besitzt.

12. Verfahren nach Anspruch 11, dadurch **gekennzeichnet,** daß das Molekulargewicht zwischen 70.000 und 200.000 beträgt.

13. Verfahren nach einem der Ansprüche 1 bis 12, dadurch **gekennzeichnet,** daß das Polymer und die Haftvermögen verleihende Komponente in Mengen von 0,7 bis 10% bzw. von 0,1 bis 5%, bezogen auf das Gewicht des Bitumens, verwendet werden.

14. Verfahren nach einem der Ansprüche 1 bis 13, dadurch **gekennzeichnet,** daß das sich aus der Kontaktierung des Bitumens mit dem Polymer der Haftvermögen verleihenden Komponente und dem Kupplungsmittel ergebende Reaktionsmedium außerdem noch 1 bis 30% eines Verflüssigungsmittel enthält.

15. Verfahren nach Anspruch 14, dadurch **gekennzeichnet,** daß das Verflüssigungsmittel aus einem Kohlenwasserstofföl mit einem Destillationsbereich bei Atmosphärendruck, ermittelt gemäß ASTM D86-87, zwischen 100 und 450°C besteht .

16. Verfahren nach einem der Ansprüche 1 bis 15, dadurch **gekennzeichnet,** daß man es zuerst bei einer

Temperatur von 100 bis 230°C und unter Rühren eines Gemisches der einzelnen für die Bildung des Reaktionsgemisches bestimmten Komponenten durchführt und dann das erhaltene Reaktionsgemisch innerhalb dieses Temperaturbereichs während einer Zeitdauer von 10 bis 180 Minuten hält.

**17.** Verfahren nach Anspruch 16, dadurch **gekennzeichnet,** daß man das Reaktionsgemisch ausgehend von den einzelnen Komponenten dadurch bildet, daß man zuerst das Polymer mit dem Bitumen bis zu Erzielung eines homogenen Gemisches kontaktiert und dann die restlichen Komponenten in das Gemisch aus Bitumen und Polymer einarbeitet.

**18.** Verfahren nach einem der Ansprüche 14 bis 16, dadurch **gekennzeichnet,** daß das Polymer, das Kupplungsmittel und gegebenenfalls die Haftvermögen verleihende Komponente in das Bitumen in Form einer Mutterlauge dieser Stoffe im Verflüssigungsmittel eingearbeitet werden, wobei die Haftvermögen verleihende Komponente, sofern sie nicht in der Mutterlauge selbst vorliegt, dem Bitumen vor, während oder nach der Einarbeitung der Mutterlauge zugesetzt wird.

**19.** Verfahren nach Anspruch 18, dadurch **gekennzeichnet,** daß in der Mutterlauge das Polymer in einer Menge von 5 bis 40 %, die Haftvermögen verleihende Komponente in einer Menge von 0,5 bis 25% und das Kupplungsmittel in einer Menge von 0,01 bis 10%, bezogen auf das Gewicht des Verflüssigungsmittels, vorliegen.

**20.** Verfahren nach Anspruch 19, dadurch **gekennzeichnet,** daß in der Mutterlauge das Polymer in einer Menge von 10 bis 35 %, die Haftvermögen verleihende Komponente in einer Menge von 1 bis 20 % und das Kupplungsmittel in einer Menge von 0,05 bis 5 %, bezogen auf das Gewicht des Verflüssigungsmittels, vorliegen.

**21.** Verfahren nach Anspruch 20, dadurch **gekennzeichnet,** daß man zur Bildung des Reaktionsgemisches 80 bis 95 Gew.-% Bitumen mit 20 bis 5 Gew.-% der Mutterlauge in Berührung bringt.

**22.** Verfahren nach einem der Ansprüche 1 bis 21, dadurch **gekennzeichnet,** daß das Kupplungsmittel ausgewählt wird unter

i) Stoffen M, die 0 bis 100 Gew.-% einer Komponente A, die aus einem oder mehreren Schwefel liefernden Vulkanisationsbeschleunigern besteht, und 100 bis 0 Gew.-% einer Komponente B enthalten, die aus einem oder mehreren Stoffen bestehen, ausgewählt unter elementarem Schwefel und Kohlenwasserstoffpolysulfiden und

ii) Stoffen N, die eine Komponente C, die aus einem oder mehreren keinen Schwefel liefernden Vulkanisationsbeschleunigern besteht, und einen Stoff M in einem Gewichtsverhältnis von Komponente C zu Stoff M von 0,01 bis 1 enthalten.

**23.** Verfahren nach Anspruch 22, dadurch **gekennzeichnet,** daß das Kupplungsmittel aus elementarem Schwefel besteht.

**24.** Verfahren nach Anspruch 22, dadurch **gekennzeichnet,** daß das Kupplungsmittel aus einem oder mehreren Kohlenwasserstoffpolysulfiden der Formel

$$R_7 — (S)_v — (— R_9 — (S)_v —)_w — R_8$$

besteht, worin $R_7$ und $R_8$ jeweils einen gesättigten oder ungesättigten einwertigen $C_{1-20}$-Kohlenwasserstoffrest bedeuten oder miteinander zur Bildung eines gesättigten oder ungesättigten zweiwertigen $C_{2-20}$-Kohlenwasserstoffrests verknüpft sind, wobei sie mit den übrigen Atomgruppen in der Formel einen Ring bilden, $R_9$ ein gesättigter oder ungesättigter zweiwertiger $C_1$-$_{20}$-Kohlenwasserstoffrest ist, die Gruppen -(S)-$_v$ zweiwertige Gruppen darstellen, von denen Jede aus v Schwefelatomen gebil- det ist, wobei v von Gruppe zu Gruppe verschieden sein kann und eine ganze Zahl von 1 bis 6 bedeutet, wobei wenigstens einer der Symbole v für 2 oder eine darüberliegende Zahl steht und w eine ganze Zahl von 0 bis 10 darstellt.

**25.** Verfahren nach Anspruch 24, dadurch **gekennzeichnet,** daß das Kohlenwasserstoffpolysulfid bzw. die Kohlenwasserstoffpolysulfide der Formel $R_{10}$-$(S)_t$-$R_{10}$ entsprechen, worin $R_{10}$ einen $C_{6-16}$-Alkylrest und -$(S)_t$- eine zweiwertige, durch Verknüpfung von t S-Atomen gebildete Gruppe darstellt, wobei t eine ganze Zahl von 2 bis 5 bedeutet.

**26.** Verfahren nach Anspruch 22, dadurch **gekennzeichnet,** daß das Kupplungsmittel in einer aus einem oder mehreren Schwefel liefernden Vulkanisationsbeschleunigern bestehenden Komponente besteht oder diese enthält, ausgewählt unter Thiurampolysulfiden der Formel

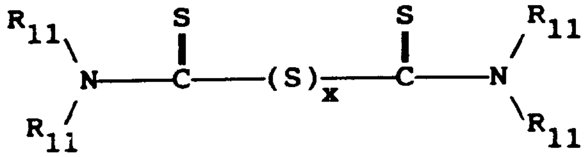

worin die Reste $R_{11}$ gleich oder verschieden sein können und jeweils einen $C_{1-12}$-Kohlenwasserstoffrest darstellen oder zwei Reste $R_{11}$, die mit demselben N-Atom verknüpft sind, miteinander zur Bildung eines zweiwertigen $C_{2-8}$-Kohlenwasserstoffrestes verbunden sind, und x ein ganze Zahl von 2 bis 8 bedeutet, sowie unter Alkylphenoldisulfiden, Morpholindisulfid und Caprolactam-N,N'-disulfid.

**27.** Verfahren nach Anspruch 22, dadurch **gekennzeichnet,** daß der (die) keinen Schwefel liefernde(n) Vulkanisationsbeschleuniger, der (die) zur Bildung der Komponente C des Stoffes N verwendet werden kann (können), ausgewählt werden unter Mercaptobenzothiazol, Benzothiazolsulfenamiden, Dithiocarbamaten der Formel

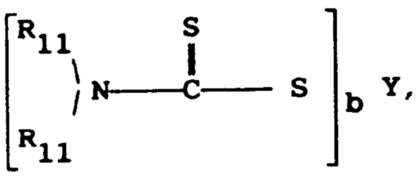

Thiurammonosulfiden der Formel

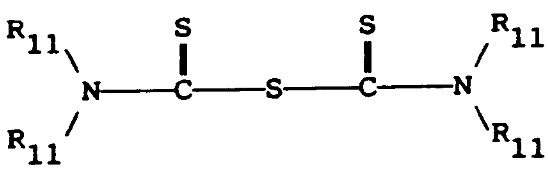

und Stoffen, die Diphenyl-,1,3-guanidin, Di-o-tolylguanidin und Zinkoxid umfassen, wobei letzteres alleine oder in Anwesenheit von Fettsäuren verwendet werden kann, und die Reste $R_{11}$, wie oben definiert, gleiche oder verschiedene Bedeutungen haben können und jeweils einen $C_{1-12}$-Kohlenwasserstoffrest darstellen oder zwei Reste $R_{11}$, die mit demselben N-Atom verknüpft sind, miteinander zur Bildung eines $C_{2-8}$-Kohlenwasserstoffrestes verbunden sind, Y für ein Metall steht und b die Wertigkeit von Y bezeichnet.

**28.** Verfahren nach einem der Ansprüche 1 bis 27, dadurch **gekennzeichnet,** daß das Reaktionsmedium, das für die Bildung des Gemisches aus Bitumen und Polymer verwendet wird, 0,05 bis 0,5%, bezogen auf das Gewicht des Bitumens, an Maleinsäureanhydrid enthält.

**29.** Verwendung des nach dem Verfahren gemäß einem der Ansprüche 1 bis 28 erhaltenen Gemisches aus Bitumen und Polymer zur Herstellung von Belägen.

**30.** Verwendung nach Anspruch 29, dadurch **gekennzeichnet,** daß die hergestellten Beläge Straßenoberflächenbeläge, Straßendecken oder Dichtungsschürzen darstellen.

**31.** Gemisch aus Bitumen und Polymer, welches ein Bitumen sowie 0,5 bis 15% eines Polymers und 0,05 bis 10%, jeweils bezogen auf das Gewicht des Bitumens, einer Stickstoffkomponente, bestehend aus einer oder mehreren Stickstoffverbindungen mit einer Molekularmasse von über 90 enthält, dadurch **gekennzeichnet,** daß die Stickstoffkomponente eine Haftvermögen verleihende Komponente ist, bestehend aus einer oder mehreren auf das Polymer des Gemisches aus Bitumen und Polymer aufgepfropften Verbindungen, die ausgewählt sind aus Verbindungen der allgemeinen Formel R-Z-$R_1$ und ihren Salzen, wobei

R einen einwertigen aliphatischen, eine oder mehrere Ungesättigtheiten enthaltenden $C_{3-30}$-Kohlenwasserstoffrest bedeutet, Z für eine zweiwertige Gruppe, ausgewählt unter

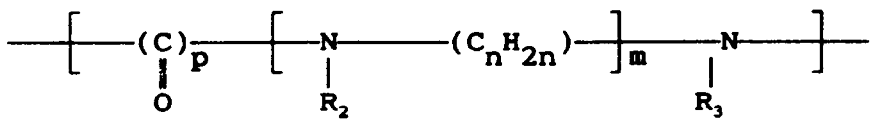

und

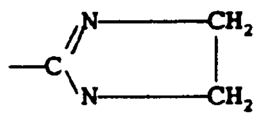

steht, wobei n eine ganze Zahl von 2 bis 6, m O oder eine ganze Zahl von 1 bis 6 und p O oder 1 bedeuten, $R_1$, $R_2$ und $R_3$ gleich oder verschieden sind und jeweils für ein Wasserstoffatom, einen aus den Resten R ausgewählten Rest, ein $C_{1-18}$-Alkyl, -Aminoalkyl oder -Hydroxyalkyl oder einen Rest der Formel -$(C_qH_{2q}O)_r$-H, worin q für eine ganze Zahl 2 oder 3 und r für eine ganze Zahl von 2 bis 10 stehen, bedeuten.

**32.** Gemisch nach Anspruch 31, dadurch **gekennzeichnet,** daß in der Formel R-Z-$R_1$ der die Haftvermögen verleihende Komponente bildenden Verbindungen der Rest R ein Alkenyl-, Alkadienyl.-, Alkatrienyl-, Alkatetraenyl- oder außerdem noch ein Alkapentaenylrest sein kann.

**33.** Gemisch nach einem der Ansprüche 31 oder 32, dadurch **gekennzeichnet,** daß in der Formel R-Z-$R_1$ der die Haftvermögen verleihende Komponente bildenden Verbindungen der Rest R ein $C_{3-20}$-Rest ist.

**34.** Gemisch nach Anspruch 31, dadurch **gekennzeichnet,** daß die die Haftvermögen verleihende Komponente bildende(n) Verbindung(en) Derivate der in Anspruch 6 definierten Formeln sind.

**35.** Gemisch nach einem der Ansprüche 31 bis 34, dadurch **gekennzeichnet,** daß das in ihm enthaltene Bitumen eine Penetration gemäß der Norm NF T 66004 zwischen 5 und 500 aufweist.

**36.** Gemisch nach einem der Ansprüche 31 bis 35, dadurch **gekennzeichnet,** daß das in ihm enthaltene Polymer ein Copolymer ist, ausgewählt unter statistischen Copolymeren oder Blockcopolymeren von Styrol mit einem konjugiertem Dien.

**37.** Gemisch nach Anspruch 36, dadurch **gekennzeichnet,** daß das Dien ausgewählt ist unter Butadien, Isopren, Chloropren, Carboxylbutadien und Carboxylisopren.

**38.** Gemisch nach einem der Ansprüche 36 oder 37, dadurch **gekennzeichnet,** daß das Copolymer aus Styrol und konjugiertem Dien einen Gewichtsanteil an Styrol zwischen 15 und 40% aufweist.

**39.** Gemisch nach einem der Ansprüche 36 bis 38, dadurch **gekennzeichnet,** daß das Copolymer ein Viskositätsmittel des Molekulargewichts zwischen 30.000 und 300.000 besitzt.

**40.** Gemisch nach Anspruch 39, dadurch **gekennzeichnet,** daß das Molekulargewicht zwischen 70.000 und 200.000 beträgt.

**41.** Gemisch nach einem der Ansprüche 31 bis 39, dadurch **gekennzeichnet,** daß das Polymer und die Haftvermögen verleihende Komponente in Mengen von 0,7 bis 10% bzw. von 0,1 bis 5%, bezogen auf das Gewicht des Bitumens, verwendet werden.

**42.** Gemisch nach einem der Ansprüche 31 bis 40, dadurch **gekennzeichnet,** daß es 1 bis 30%, bezogen auf das Gewicht des Bitumens, eines Flußmittels enthält.

**43.** Gemisch nach Anspruch 42, dadurch **gekennzeichnet,** daß das Flußmittel aus einem Kohlenwasserstofföl mit einem Destillationsbereich bei Atmosphärendruck, ermittelt gemäß ASTM D86-87, zwischen 100

und 450°C besteht.

## Claims

1. Method of preparing a bitumen / polymer composition, in which there are put into contact at a temperature of between 100°C and 230°C, and under agitation, for a duration of at least 10 minutes, a bitumen and, counted in weight of the bitumen, 0.5 to 15% of a polymer and 0.05 to 10% of a nitrogenous component consisting of one or a plurality of nitrogenous components which have a molecular mass greater than 90, and this contact is created in the presence of a coupling agent which provides elementary or radical free sulphur, the said coupling agent being present in the medium which contains the bitumen, the polymer and the nitrogenous component, in a quantity sufficient to provide a quantity of free sulphur representing 0.1 to 10% of the overall weight of the polymer and nitrogenous component in the said medium, characterised in that the nitrogenous component is an adhesion promoter containing one or a plurality of components selected from amongst the components of the general formula R-Z-$R_1$ and their salts, R in this formula designating a $C_3$ to $C_{30}$ monovalent aliphatic hydrocarbon radical, containing one or a plurality of unsaturations, Z representing a divalent group selected from amongst

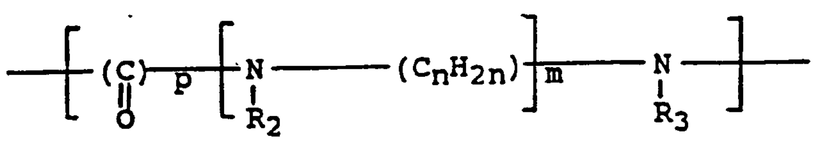

and

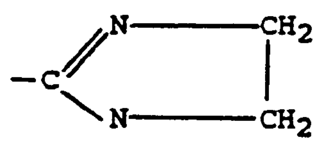

in which n is a whole number ranging from 2 to 6, m represents zero or a whole number ranging from 1 to 6 and p is zero or 1, and $R_1$, $R_2$ and $R_3$, which are identical or different, each designate a hydrogen atom, a radical selected from amongst the R radicals, a $C_1$ to $C_{18}$ alkyl, aminoalkyl or hydroxyalkylradical

or a-$(C_q H_{2q} O)_r$ H radical, with q designating a number equal to 2 or 3, and r representing a whole number ranging from 2 to 10.

2. Method according to Claim 1, characterised in that the coupling agent is used in a proportion suitable for providing a quantity of free sulphur which represents 0.5 to 8% of the overall weight of polymer and of adhesion promoter in the reactive medium.

3. Method according to Claim 1 or Claim 2, characterised in that in the formula of the components which form the adhesion promoter, the radicals $R_1$, $R_2$ and $R_3$, which are identical or different, each represent a $C_1$ to $C_{12}$ alkyl, aminoalkyl or hydroxyalkyl radical, and, in the formulae of the divalent group Z, n is a whole number ranging from 2 to 4 and m is a whole number ranging from 1 to 4.

4. Method according to any one of Claims 1 to 3, characterised in that in the general formula R-Z-$R_1$ of the components which form the adhesion promoter, the R radical is an alkenyl, alkadienyl, alkatrienyl, alkatetraenyl or alkapentaenyl radical.

5. Method according any one of Claims 1 to 4, characterised in that in the general formula R-Z-$R_1$, of the components which form the adhesion promoter, the R radical is $C_8$ to $C_{20}$.

6. Method according to any one of Claims 1 to 5, characterised in that the component or components which forms or form the adhesion promoter is or are derivatives in accordance with one or the other of the formulae

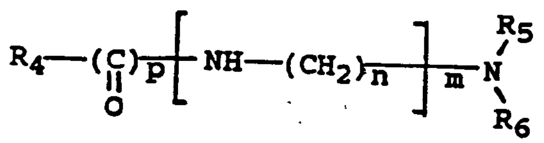 and 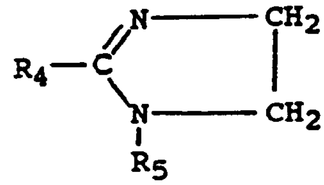

in which $R_4$ designates a $C_8$ to $C_{20}$ monovalent aliphatic hydrocarbon radical which contains one or a plurality of unsaturations of the type

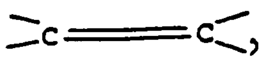

the symbols $R_5$ and $R_6$, which are identical or different, each designate a hydrogen atom or a $C_1$ to $C_8$ alkyl, aminoalkyl or hydroxyalkyl radical, and m, n and p are defined as in Claim 1.

7. Method according to any one of Claims 1 to 6, characterised in that the bitumen has penetration, in accordance with standard NF T 66004, of between 5 and 500.

8. Method according to any one of Claims 1 to 7, characterised in that the polymer used is a copolymer selected from amongst the statistical or sequenced copolymers of styrene with a conjugated diene.

9. Method according to Claim 8, characterised in that the said diene is selected from amongst butadiene, isoprene, chloroprene, carboxylated butadiene and carboxylated isoprene.

10. Method according to Claim 8 or claim 9, characterised in that the styrene and conjugated diene copolymer has a weight content of styrene ranging from 15 to 40 %.

11. Method according to any one of Claims 8 to 10, characterised in that the copolymer has a mean viscosimetric molecular mass of between 30000 and 300000.

12. Method according to Claim 11, characterised in that the said molecular mass is between 70000 and 200000.

13. Method according to any one of Claims 1 to 12, characterised in that the polymer and the adhesion promoter are used in quantities which represent respectively 0.7 to 10% and 0.1 to 5% of the weight of the bitumen.

14. Method according to any one of Claims 1 to 13, characterised in that the reactive medium obtained by bringing into contact the bitumen, the polymer, the adhesion promoter and the coupling agent, also contains 1 to 30%, in weight of the bitumen, of a fluxing agent.

15. Method according to Claim 14, characterised in that the fluxing agent is a hydrocarbon oil which has a distillation interval at atmospheric pressure, determined in accordance with standard ASTM D86-87, of between 100°C and 450°C.

16. Method according to any one of Claims 1 to 15, characterised in that firstly a mixture of the various ingredients destined to constitute the reactive mixture is produced at a temperature of between 100° and 230°C and with stirring, and the reactive mixture obtained is then maintained in the said temperature interval for a period of 10 to 180 minutes.

17. Method according to Claim 16, characterised in that the reactive mixture is constituted from the ingredients which form it, by firstly putting the polymer into contact with the bitumen until a homogeneous mixture is obtained, then by incorporating the remaining ingredients with the said mixture of bitumen and polymer.

18. Method according to any one of Claims 14 to 16, characterised in that the polymer, the coupling agent, and optionally the adhesion promoter, are incorporated in the bitumen in the form of a mother solution of these products in the fluxing agent, the adhesion promoter, if it is not present in the mother solution, being incorporated in the bitumen before, during or after the mother solution is incorporated with the latter.

**19.** Method according to Claim 18, characterised in that the respective quantities of polymer, adhesion promoter and coupling agent in the mother solution represent 5 to 40%, 0.5 to 5% and 0.01 to 10% by weight of the fluxing agent.

**20.** Method according to Claim 19, characterised in that the respective quantities of polymer, adhesion promoter and coupling agent in the mother solution represent 10 to 35%, 1 to 20% and 0.05 to 5% by weight of the fluxing agent.

**21.** Method according to Claim 20, characterised in that 80 to 95% by weight of bitumen is put into contact with 20 to 5% by weight of the mother solution, in order to form the reactive mixture.

**22.** Method according to any one of Claims 1 to 21, characterised in that the coupling agent is selected from amongst (i) the products M, which contain 0 to 100% by weight of a component A consisting of one or a plurality of vulcanising accelerators which provide sulphur and 100% to 0% of a component B consisting of one or a plurality of agents selected from amongst elementary sulphur and hydrocarbyl polysulphides, and (ii) the products N, which contain a component C consisting of one or a plurality of vulcanising accelerators which do not provide sulphur and a product M, in a ratio by weight of 0.01 to 1 of the component C to the product M.

**23.** Method according to Claim 22, characterised in that the coupling agent consists of elementary sulphur.

**24.** Method according to Claim 22, characterised in that the coupling agent consists of one or a plurality of hydrocarbyl polysulphides of the formula

$$R_7-(S)_v-(R_9-(S)_v)_w-R_8$$

in which $R_7$ and $R_8$ each designate a $C^1$ to $C_{20}$ monovalent, saturated or non-saturated hydrocarbon radical, or are bonded to one another in order to constitute a $C_2$ to $C_{20}$ divalent, saturated or non-saturated hydrocarbon radical, forming a cycle with the other groups of atoms associated in the formula, $R_9$ is a $C_1$ to $C_{20}$ divalent, saturated or non-saturated hydrocarbon radical, the $-(S)-_v$ represent divalent groups, each formed of v atoms of sulphur, in which the vs can be different from one of the said groups to the other, and designate whole numbers ranging from 1 to 6,with at least one of the vs being equal to or greater than 2, and w represents a whole number which assumes the values of zero to 10.

**25.** Method according to Claim 24, characterised in that the hydrocarbyl polysulphide or polysulphides complies or comply with the formula $R_{10}-(S)_t-R_{10}$, in which $R_{10}$ designates a $C_6$ to $C_{16}$ alkyl radical and $-(S)_t-$ represents a divalent group formed by a chain of t atoms of sulphur, t being a whole number ranging from 2 to 5.

**26.** Method according to Claim 22, characterised in that the coupling agent consists of or contains a component A, comprising one or a plurality of vulcanising accelerators which provide sulphur, selected from amongst the thiuram polysulphides of the formula

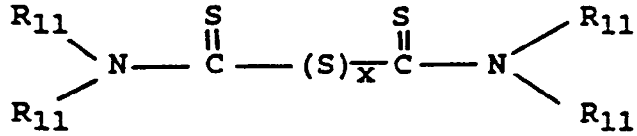

in which the $R_{11}$s, which are identical or different, each represent a $C_1$ to $C_{12}$ hydrocarbon radical or two $R_{11}$ radicals, attached to a single nitrogen atom, are bonded to one another in order to form a $C_2$ to $C_8$ divalent hydrocarbon radical, and x is a number ranging from 2 to 8 ,alkylphenol disulphides, morpholine disulphide and N,N'-caprolactam disulphide.

**27.** Method according to Claim 22, characterised in that the vulcanisation accelerator or accelerators which do not provide sulphur which can be used in order to form the component C of the product N, is or are selected from amongst mercaptobenzothiazole, benzothiazolesulphenamides , dithiocarbamates of the

formula

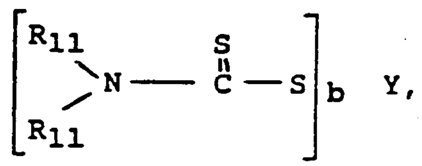

thiuram monosulphides of the formula

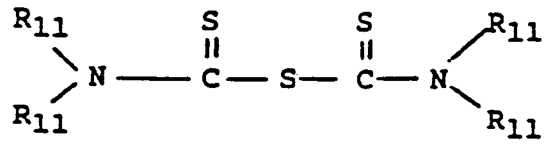

and products comprising diphenyl-1,3 guanidine, diorthotolylguanidine and zinc oxide, the latter being used alone or in the presence of fatty acids, with in the said formulae the $R_{11}$s which are identical or different, each representing a $C_1$ to $C_{12}$ hydrocarbon radical, or two $R_{11}$ radicals attached to a single nitrogen atom are bonded to one another in order to form a $C_2$ to $C_8$ hydrocarbon radical, Y representing a metal and b designating the valence of Y.

**28.** Method according to any one of Claims 1 to 27, characterised in that the reactive medium which gives rise to the bitumen/polymer composition, contains maleic anhydride in a quantity representing 0.05 to 0.5% by weight of the bitumen.

**29.** Application of the bitumen/polymer composition obtained by the method according to any one of Claims 1 to 28, for the production of coatings.

**30.** Application according to Claim 29, characterised in that the coatings produced consist of road surface dressings, asphalt coatings or seal coatings.

**31.** Bitumen/polymer composition of the type which contains a bitumen, and, counted in weight of the bitumen, 0.5 to 15% of a polymer and 0.05 to 10% of a nitrogenous component, consisting of one or a plurality of nitrogenous components which have a molecular mass greater than 90, and characterised in that the nitrogenous component is an adhesion promoter which contains one or a plurality of components grafted on the polymer present in the bitumen / polymer composition, and selected from amongst components of the general formula, $R\text{-}Z\text{-}R_1$ and their salts, R in this formula designating a $C_3$ to $C_{30}$ monovalent aliphatic hydrocarbon radical which contains one or a plurality of unsaturations, Z representing a divalent group selected from amongst

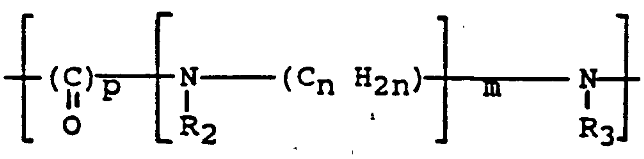 and 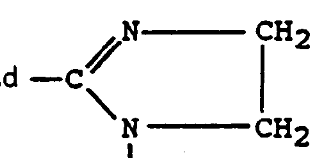

in which n designates a whole number ranging from 2 to 6, m represents zero or a whole number ranging from 1 to 6 and p is zero or 1, and $R_1$, $R_2$ and $R_3$, which are identical or different, each represent a hydrogen atom, a radical selected from amongst the R radicals, a $C_1$ to $C_{18}$ alkyl, aminoalkyl or hydroxyalkyl radical,

or a $(C_qH_{2q}O)_r$ H radical, with q designating a number equal to 2 or 3, and r representing a whole number ranging from 2 to 10.

**32.** Composition according to Claim 31, characterised in that in the formula $R\text{-}Z\text{-}R_1$ of the components which form the adhesion promoter, the radical R is an alkenyl, alkadienyl, alkatrienyl, alkatetraenyl or alkapentaenyl radical.

**33.** Composition according to Claim 31 or Claim 32, characterised in that in the formula R-Z-$R_1$, of the components which form the adhesion promoter, the R radical is $C_8$ to $C_{20}$.

**34.** Composition according to Claim 31, characterised in that the component or components which forms or form the adhesion promoter is or are derivatives in accordance with one or the other of the formulae defined in Claim 6.

**35.** Composition according to any one of Claims 31 to 34, characterised in that the bitumen which it contains has penetration, in accordance with standard NF T 66004, of between 5 and 500.

**36.** Composition according to any one of Claims 31 to 35, characterised in that the polymer which it contains is a statistical or sequenced copolymer of styrene with a conjugated diene.

**37.** Composition according to Claim 36, characterised in that the said diene is selected from amongst butadiene, isoprene, chloroprene, carboxylated butadiene and carboxylated isoprene.

**38.** Composition according to Claim 36 or Claim 37, characterised in that the styrene and conjugated diene copolymer has a weight content of styrene ranging from 15 to 40 %.

**39.** Composition according to any one of Claims 36 to 38, characterised in that the copolymer has a mean viscosimetric molecular mass of between 30000 and 300000.

**40.** Composition according to Claim 39, characterised in that the said molecular mass is between 70000 and 200000.

**41.** Composition according to any one of Claims 31 to 39, characterised in that the polymer and adhesion promoter contents of the composition represent respectively 0.7 to 10% and 0.1 to 5% by weight of the bitumen.

**42.** Composition according to any one of Claims 31 to 40, characterised in that it contains 1 to 30%, in weight of the bitumen, of a fluxing agent.

**43.** Composition according to Claim 42, characterised in that the said fluxing agent is a hydrocarbon oil which has a distillation interval at atmospheric pressure, determined in accordance with standard ASTM D 86-87, of between 100°C and 450°C.